# FASCICULE DE BREVET EUROPEEN

(11) **EP 3 073 416 B1**
(45) Date de publication et mention de la délivrance du brevet: **14.03.2018**
(21) Numéro de dépôt: 16161554.7
(22) Date de dépôt: 22.03.2016
(51) Int. Cl.: G06K 9/00

(54) **DISPOSITIF DE VÉRIFICATION DE LA VÉRACITÉ D'UNE EMPREINTE DIGITALE**
VORRICHTUNG ZUM ÜBERPRÜFEN DER ECHTHEIT EINES FINGERABDRUCKS
DEVICE FOR CHECKING THE VERACITY OF A FINGERPRINT

(30) Priorité: 23.03.2015 FR 1552356
(43) Date de publication de la demande: 28.09.2016
(73) Titulaire: Morpho, 92445 Issy-les-Moulineaux (FR)
(72) Inventeur: THIEBOT, Alain, 92445 ISSY LES MOULINEAUX (FR); FOURRE, Joël-Yann, 92445 ISSY LES MOULINEAUX (FR)
(74) Mandataire: Le Guen-Maillet

(56) Documents cités:
- US-A1- 2014 049 373
- KUCKEN M ET AL: "Fingerprint formation", JOURNAL OF THEORETICAL BIOLOGY, ACADEMIC PRESS, LONDON, GB, vol. 235, no. 1, 7 juillet 2005 (2005-07-07), pages 71-83, XP004843053, ISSN: 0022-5193, DOI: 10.1016/J.JTBI.2004.12.020
- Minh Binh Nguyen ET AL: "Epidermal Ridges: Positional Information Coded in an Orientation Field" In: Miroslav M. Novak: "Thining in Patterns - Fractals and Related Phenomena in Nature", 1 janvier 2004 (2004-01-01), World Scientific, Singapore, XP055240297, pages 279-290, * page 289 *
- KUMAR AJAY ET AL: "Towards Contactless, Low-Cost and Accurate 3D Fingerprint Identification", IEEE COMPUTER SOCIETY CONFERENCE ON COMPUTER VISION AND PATTERN RECOGNITION. PROCEEDINGS, IEEE COMPUTER SOCIETY, US, 23 juin 2013 (2013-06-23), pages 3438-3443, XP032492972, ISSN: 1063-6919, DOI: 10.1109/CVPR.2013.441 [extrait le 2013-10-02]

## Description

La présente invention concerne un dispositif de vérification de la véracité d'une empreinte digitale, ainsi qu'un procédé de vérification de la véracité d'une empreinte digitale mis en oeuvre par un tel dispositif de vérification. Elle trouve application dans le domaine de la reconnaissance biométrique par analyse des empreintes digitales d'une personne.

Il est connu de capturer une image bidimensionnelle d'une empreinte digitale et de comparer cette image à un ensemble d'images de référence d'une base de données de personnes autorisées.

Il est également connu de construire un modèle tridimensionnel (3D) de l'empreinte et du doigt à partir d'une pluralité d'images capturées simultanément. Le document US-A-2006/120576 divulgue un dispositif permettant la réalisation d'une telle construction. Il est alors possible de comparer le modèle ainsi construit avec des modèles de référence d'une base de données de personnes autorisées.

Dans le cadre d'une construction tridimensionnelle, la capture des images s'effectue sans contact, c'est-à-dire sans qu'il y ait de contact entre le doigt et un support afin d'éviter que la déformation du doigt n'entraîne la déformation de l'empreinte.

Certains individus mal intentionnés réussissent à reproduire l'empreinte du doigt d'une personne autorisée en réalisant une reproduction de l'empreinte entre autres sur un film. Un tel individu peut alors coller le film sur son propre doigt afin de déjouer la sécurité.

Un objet de la présente invention est de proposer un dispositif de vérification de la véracité d'une empreinte digitale qui ne présente pas les inconvénients de l'état de la technique et qui, en particulier, permet de vérifier que l'empreinte qui est présentée correspond effectivement au doigt qui la porte.

A cet effet, est proposé un dispositif de vérification destiné à vérifier la véracité d'une empreinte digitale du doigt d'une personne, le dispositif de vérification comportant :
- un système de capture destiné à capturer sans contact au moins une image dudit doigt et de ladite empreinte,
- des moyens d'acquisition destinés à acquérir sans contact un modèle tridimensionnel du doigt,
- des moyens de détermination destinés à déterminer le noyau sur l'image de l'empreinte,
- des moyens d'orientation destinés à déterminer l'orientation et la position de l'extrémité dudit doigt,
- des moyens de localisation destinés à localiser le sommet du modèle tridimensionnel,
- des moyens de position destinés à déterminer les positions relatives entre ladite extrémité, ledit sommet et ledit noyau,
- des premiers moyens de vérification destinés à vérifier que les positions relatives du noyau, du sommet et de l'extrémité du doigt ainsi déterminées sont conformes à celles attendues,
- des moyens de calcul destinés à calculer la distance entre le sommet du modèle tridimensionnel ainsi localisé et le noyau ainsi déterminé,
- des deuxièmes moyens de vérification destinés à vérifier que la distance entre le sommet et le noyau ainsi calculée est comprise dans un premier intervalle prédéfini, et
- des premiers moyens de prise de décision destinés à prendre une décision quant à la véracité de l'empreinte digitale à partir d'informations transmises par les premiers moyens de vérification et les deuxièmes moyens de vérification.

Avantageusement, les moyens de calcul sont également destinés à calculer la distance entre l'extrémité du doigt et le noyau et le rapport de la distance entre l'extrémité du doigt et le noyau sur la distance entre le sommet et le noyau, et le dispositif de vérification comporte en outre des troisièmes moyens de vérification destinés à vérifier que le rapport ainsi calculé est compris dans un deuxième intervalle prédéfini, et les premiers moyens de prise de décision sont destinés à prendre une décision quant à la véracité de l'empreinte digitale à partir d'informations également transmises par les troisièmes moyens de vérification.

Avantageusement, le dispositif de vérification comporte en outre:
- des moyens de prédiction destinés à déterminer une zone susceptible de contenir ledit sommet à partir de la position du noyau déterminée par les moyens de détermination,
- des moyens de test destinés à calculer la courbure de ladite zone et à tester si cette courbure est comprise dans un troisième intervalle prédéfini, où la courbure de la zone est la moyenne sur la zone de la courbure moyenne de la surface du doigt,
- des deuxièmes moyens de prise de décision destinés à prendre une décision quant à la véracité de l'empreinte digitale à partir d'une information transmise par les moyens de test.

L'invention propose également un procédé de vérification mis en oeuvre par le dispositif de vérification des variantes précédentes et comportant :
- une étape de capture au cours de laquelle le système de capture sans contact au moins une image dudit doigt et de ladite empreinte,
- une étape de construction au cours de laquelle les moyens d'acquisition acquièrent sans contact un modèle tridimensionnel du doigt,
- une étape de détermination au cours de laquelle les moyens de détermination déterminent le noyau sur l'image de l'empreinte,
- une étape d'orientation au cours de laquelle les moyens d'orientation déterminent l'orientation et la position de l'extrémité dudit doigt,
- une étape de localisation au cours de laquelle les moyens de localisation localisent le sommet du modèle tridimensionnel,
- une étape de position au cours de laquelle les moyens de position déterminent les positions relatives entre ladite extrémité, ledit sommet et ledit noyau,
- une première étape de vérification au cours de laquelle les premiers moyens de vérification vérifient que les positions relatives ainsi déterminées sont conformes à celles attendues,
- une étape de calcul au cours de laquelle les moyens de calcul calculent la distance entre le sommet du modèle tridimensionnel ainsi localisé et le noyau ainsi déterminé, ainsi que la distance entre l'extrémité du doigt et le noyau et le rapport de la distance entre l'extrémité du doigt et le noyau sur la distance entre le sommet et le noyau,
- une deuxième étape de vérification au cours de laquelle les deuxièmes moyens de vérification vérifient que la distance entre le sommet et le noyau ainsi calculée est comprise dans le premier intervalle prédéfini,
- une troisième étape de vérification au cours de laquelle les troisièmes moyens de vérification vérifient que le rapport ainsi calculé est compris dans le deuxième intervalle prédéfini, et
- une première étape de prise de décision au cours de laquelle les premiers moyens de prise de décision prennent une décision quant à la véracité de l'empreinte digitale à partir d'informations transmises par les premiers moyens de vérification, les deuxièmes moyens de vérification et les troisièmes moyens de vérification après respectivement la première étape de vérification, la deuxième étape de vérification et le troisième étape de vérification.

Avantageusement, le procédé de vérification comporte en outre:
- une étape de prédiction au cours de laquelle les moyens de prédiction déterminent la zone susceptible de contenir ledit sommet à partir de la position du noyau déterminée par les moyens de détermination et l'orientation du doigt déterminée par les moyens d'orientation,
- une étape de test au cours de laquelle les moyens de test calculent la courbure de ladite zone et testent si cette courbure est comprise dans le troisième intervalle prédéfini, et
- une deuxième étape de prise de décision au cours de laquelle les deuxièmes moyens de prise de décision prennent une décision quant à la véracité de l'empreinte digitale à partir d'une information transmise par les moyens de test après l'étape de test.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une représentation schématique d'un dispositif de vérification de la véracité d'une empreinte digitale d'une personne selon l'invention, et
la Fig. 2 représente une image d'une empreinte digitale, et
la Fig. 3 représente un algorithme d'un procédé de vérification de la véracité d'une empreinte digitale d'une personne selon l'invention.

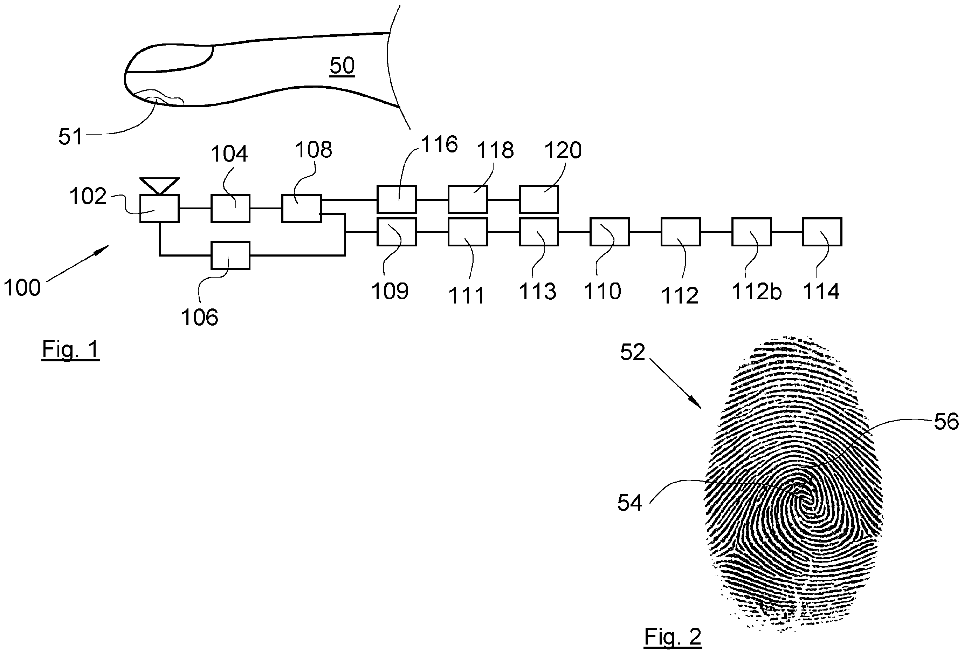

La Fig. 1 représente un dispositif de vérification 100 destiné à vérifier la véracité d'une empreinte digitale 51 du doigt 50 d'une personne.

La Fig. 2 est un exemple d'une image 52 d'une empreinte digitale 51. L'image 52 montre des vallées et des crêtes ainsi qu'un point particulier 54 appelé le noyau ("core" en anglais) de l'empreinte 51 et qui correspond au centre de courbure de l'empreinte 51.

Le noyau 54 est situé au point d'attachement d'un nerf rattaché à la dernière phalange, comme cela est décrit sur le lien:
http://math.arizona.edu/∼anewell/publications/Fingerprint_Formation.pdf.

La face interne de la dernière phalange du doigt 50 présente au moins un dôme local dont le sommet 56 est situé entre 1 et 3 mm du noyau 54 vers l'extrémité du doigt 50.

De même, l'extrémité du doigt 50, le sommet 56 et le noyau 54 sont globalement alignés et le noyau 54 ne peut pas être désaxé sur les côtés du doigt 50.

De plus, le sommet 56 et le noyau 54 sont situés très près du centre de la dernière phalange, dans un cercle centré sur le centre de la phalange et de rayon 6 mm maximum.

La dimension de la dernière phalange peut être obtenue en mesurant la distance projetée à la surface entre l'extrémité du doigt 50 et les lignes basales (premiers plis orthogonaux à l'axe du doigt 50 projeté en surface). Cependant, les lignes basales ne sont pas toujours visibles dans l'image acquise. On vérifiera simplement que, le sommet et le noyau étant assez serrés et relativement centrés sur la dernière phalange, le noyau et le sommet sont beaucoup plus proches l'un de l'autre que le noyau et l'extrémité du doigt, et dans un rapport borné entre 2 et 7 fois.

Le principe de l'invention consiste à vérifier que le noyau 54, le sommet 56 du dôme de la phalange et l'extrémité du doigt vérifient les positions relatives définies précédemment.

Si le noyau 54 est bien placé en retrait du somment 56 du dôme par rapport à l'extrémité du doigt 50 et que ces trois éléments sont donc relativement bien alignés et que la distance entre le noyau 54 et le somment 56 est comprise dans un premier intervalle et que le rapport de la distance entre l'extrémité du doigt 50 et le noyau 54 sur la distance entre le sommet 56 et le noyau 54 est compris dans un deuxième intervalle, ils seront considérés comme vérifiant les critères de véracité et le doigt 50 et l'empreinte 51 seront considérés comme vrais.

Typiquement, le premier intervalle est compris entre 0,5 et 3,5 mm, et plus précisément entre 1 et 3 mm.

Typiquement, la tolérance sur le défaut d'alignement dans l'image d'empreinte est de 5° maximum entre deux des trois droites passant entre les points pris deux à deux parmi le sommet 56, l'extrémité et le noyau 54.

Typiquement, le deuxième intervalle est compris entre 2 et 7.

Si le noyau 54 n'est pas placé en retrait du somment 56 du dôme par rapport à l'extrémité du doigt 50 ou à une distance qui n'est pas comprise dans ledit premier intervalle, ou si l'extrémité du doigt 50, le sommet 56 et le noyau 54 ne sont pas assez alignés ou encore, si le noyau 54 n'est pas assez loin de l'extrémité du doigt 50 comparé à sa distance du sommet 56, ils seront considérés comme ne vérifiant pas les critères de véracité et le doigt 50 et l'empreinte 51 seront considérés comme faux. L'incohérence entre la position attendue de l'extrémité du doigt 50, du sommet 56 et du noyau 54 provient du mauvais positionnement d'un film et donc du noyau 54 sur le doigt 50 lors d'une tentative de fraude.

Dans le cas des fraudes fabriquées à partir d'un moulage de vrai doigt, il est quasiment systématique que le dôme soit aplati lors de l'appui du doigt dans le matériau de moulage, provoquant un creux à la place du dôme sur la fraude finale.

Le dispositif de vérification 100 comprend :
- un système de capture 102 destiné à capturer sans contact au moins une image dudit doigt 50 et de ladite empreinte 51,
- des moyens d'acquisition 104 destinés à acquérir sans contact un modèle tridimensionnel du doigt 50,
- des moyens de détermination 106 destinés à déterminer le noyau 54 sur l'image 52 de l'empreinte 51,
- des moyens d'orientation 109 destinés à déterminer l'orientation et la position de l'extrémité dudit doigt 50 à partir des images capturées ou du modèle tridimensionnel,
- des moyens de localisation 108 destinés à localiser le sommet 56 du modèle tridimensionnel,
- des moyens de position 111 destinés à déterminer les positions relatives entre ladite extrémité, ledit sommet 56 et ledit noyau 54,
- des premiers moyens de vérification 113 destinés à vérifier que les positions relatives du noyau 54, du sommet 56 et de l'extrémité du doigt ainsi déterminées sont conformes à celles attendues,
- des moyens de calcul 110 destinés à calculer la distance entre le sommet 56 du modèle tridimensionnel ainsi localisé et le noyau 54 ainsi déterminé,
- des deuxièmes moyens de vérification 112 destinés à vérifier que la distance ainsi calculée entre le sommet 56 et le noyau 54 est comprise dans le premier intervalle prédéfini, et
- des premiers moyens de prise de décision 114 destinés à prendre une décision quant à la véracité de l'empreinte digitale 51 à partir d'informations transmises par les premiers moyens de vérification 113 et les deuxièmes moyens de vérification 112.

Le dispositif de vérification 100 permet ainsi de vérifier la concordance de positions, dont l'alignement, entre l'extrémité du doigt 50, le sommet 56 et le noyau 54, ainsi que la concordance de distance entre le sommet 56 du dôme de la phalange et le noyau 54 de l'empreinte 51, ainsi que le fait que le sommet 56 et le noyau 54 sont relativement proches entre eux et relativement loin de l'extrémité du doigt 50 et donc d'en déduire la véracité de l'empreinte 51 ainsi présentée.

Pour améliorer la vérification, les moyens de calcul 110 sont également destinés à calculer la distance entre l'extrémité du doigt et le noyau 54 et le rapport de la distance entre l'extrémité du doigt 50 et le noyau 54 sur la distance entre le sommet 56 et le noyau 54. Le dispositif de vérification 100 comporte alors en outre des troisièmes moyens de vérification 112b destinés à vérifier que le rapport ainsi calculé est compris dans un deuxième intervalle prédéfini, et les premiers moyens de prise de décision 114 sont destinés à prendre une décision quant à la véracité de l'empreinte digitale 51 à partir d'informations également transmises par les troisièmes moyens de vérification 112b.

Les moyens d'orientation 109 s'appuient par exemple sur la détermination du moment d'inertie du modèle tridimensionnel du doigt pour retrouver l'axe du doigt 50. Une autre solution consiste à faire correspondre un modèle de doigt au modèle tridimensionnel acquis en approximant par exemple la forme d'un doigt par un cylindre avec une sphère de même rayon au bout.

La position de l'extrémité du doigt 50 sur cet axe peut ensuite être déterminée comme la projection sur cet axe du point du modèle tridimensionnel le plus loin de la paume. En général, l'ergonomie du capteur permet de savoir sans ambiguïté de quel côté est située la paume, sinon, celle-ci peut être également partiellement imagée par le système ou encore elle sera située du côté où le doigt est coupé par le bord du capteur.

Pour déterminer les positions relatives entre l'extrémité du doigt 50, le sommet 56 et le noyau 54, les moyens de position 111 procèdent par exemple en projetant la position du noyau 54 sur le modèle tridimensionnel.

Les premiers moyens de vérification 113 peuvent ainsi vérifier que le sommet 56 est bien situé entre l'extrémité et le noyau 54 ce qui constitue les positions relatives attendues. De plus, les premiers moyens de vérifications 113 vérifient également que le sommet 56 du dôme, l'extrémité du doigt 50 et le noyau 54 sont alignés sur l'image 2D de la phalange, ou au moins que pour deux des trois droites passant entre les trois points pris deux à deux parmi le sommet 56, l'extrémité et le noyau 54, l'angle est au maximum de 5°.

Pour déterminer la distance entre le sommet 56 du modèle tridimensionnel et le noyau 54, ainsi que la distance entre l'extrémité du doigt 50 et le noyau 54, les moyens de calcul 110 procèdent par exemple en projetant la position du noyau 54 sur le modèle tridimensionnel ou à l'inverse en projetant la position du dôme et de l'extrémité du doigt 50 sur l'image de l'empreinte.

Le système de capture 102 peut être tout système sans contact et adapté pour capturer une image bidimensionnelle 52 de l'empreinte 51 et une/des images du doigt 50 permettant la construction ultérieure d'un modèle tridimensionnel dudit doigt 50.

Il peut s'agir, par exemple, d'un ou plusieurs moyens de capture, tels que des caméras ou des capteurs CCD ou CMOS. D'autres moyens sont également envisageables comme par exemple une caméra fonctionnant sur le principe du temps de vol, ou sur une méthode utilisant les ultrasons.

Le document intitulé "High-Resolution Structured Light Range Scanner with Automatic Calibration" écrit par A. M. BRONSTEIN et al. et publié le 04 août 2003 présente, dans le cadre d'une analyse faciale qui peut être appliquée dans le cas d'un doigt, des étapes d'approximation de la surface tridimensionnelle d'une mire et une étape d'application de l'image capturée de la face sur la surface tridimensionnelle ainsi approximée.

Le système de capture 102 peut alors comprendre les moyens nécessaires à une telle application, comme par exemple un projecteur de mire.

Les moyens d'acquisition 104 sont par exemple des moyens logiciels qui construisent un modèle tridimensionnel du doigt 50 à partir des images capturées. Le modèle tridimensionnel comprend dans le cas d'un doigt authentique au moins un dôme local représentatif de la face intérieure de la dernière phalange du doigt 50.

Les moyens de localisation 108 déterminent la localisation du sommet 56 du dôme du modèle tridimensionnel, par exemple en déterminant le point du dôme présentant la courbure moyenne maximale. La courbure est choisie de telle façon à être positive sur une partie convexe du doigt. La courbure moyenne est définie par exemple sur le site https://fr.wikipedia.org/wiki/Courbure, et les courbures principales sont définies par exemple en page 24 (définition 22) de l'ouvrage « Courbes et Surfaces » de Boris Thibert.

Préférentiellement la surface aura été préalablement lissée pour ne pas tenir compte du relief des crêtes, typiquement en supprimant toutes les reliefs d'échelle inférieure à 1mm. Comme l'extrémité du doigt est un maximum local de courbure, il doit être déterminé en premier et la recherche de dôme exclut une zone de 3mm autour de l'extrémité du doigt.

Les moyens de détermination 106 déterminent le noyau par analyse des courbures des vallées et des crêtes visibles sur l'image 52.

On peut citer par exemple le document "A Novel Method for Fingerprint Core Point Détection" de Johal, Navrit Kaur, et Amit Kamra, publié dans International Journal of Scientific & Engineering Research 2.4 (2011), et le document "Singular point détection in fingerprint image" de Zhang, Weiwei, et Yangsheng Wang publié dans The 5th Asian Conférence on Computer Vision (2002).

Les moyens de calcul 110 calculent la distance existant entre le sommet 56 du modèle tridimensionnel représentatif du doigt 50 et le noyau 54 de l'empreinte 51. Les moyens de calcul 110 calculent également la distance entre l'extrémité du doigt 50 et le noyau 54.

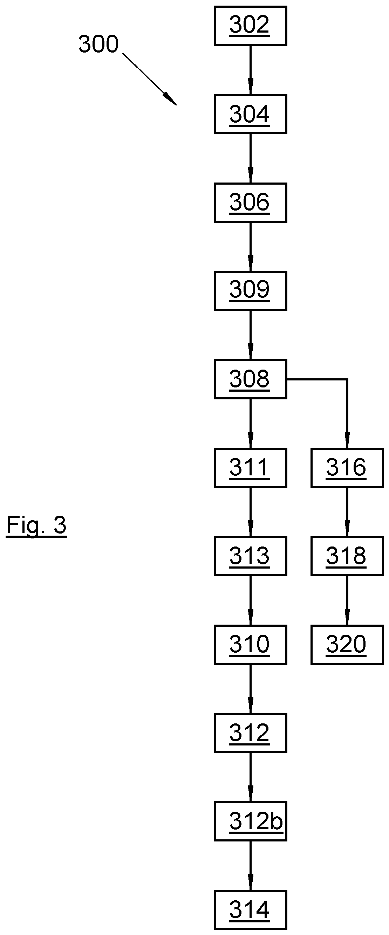

La Fig. 3 montre un procédé de vérification 300 mis en oeuvre par le dispositif de vérification 100 et destiné à vérifier la véracité de l'empreinte digitale 51 du doigt 50.

Le procédé de vérification 300 est réalisé par le dispositif de vérification 100 et comprend :
- une étape de capture 302 au cours de laquelle le système de capture 102 capture au moins une image dudit doigt 50 et de ladite empreinte 51,
- une étape d'acquisition 304 au cours de laquelle les moyens d'acquisition 104 acquièrent un modèle tridimensionnel du doigt 50,
- une étape de détermination 306 au cours de laquelle les moyens de détermination 106 déterminent le noyau 54 sur l'image 52 de l'empreinte 51,
- une étape d'orientation 309 au cours de laquelle les moyens d'orientation 109 déterminent l'orientation et la position de l'extrémité dudit doigt 50 à partir des images capturées ou du modèle tridimensionnel,
- une étape de localisation 308 au cours de laquelle les moyens de localisation 108 localisent le sommet 56 du modèle tridimensionnel,
- une étape de position 311 au cours de laquelle les moyens de position 111 déterminent les positions relatives entre ladite extrémité, ledit sommet 56 et ledit noyau 54,
- une première étape de vérification 313 au cours de laquelle les premiers moyens de vérification 113 vérifient que les positions relatives ainsi déterminées sont conformes à celles attendues,
- une étape de calcul 310 au cours de laquelle les moyens de calcul 110 calculent la distance entre le sommet 56 du modèle tridimensionnel ainsi localisé et le noyau 54 ainsi déterminé, ainsi que la distance entre l'extrémité du doigt et le noyau 54 et le rapport de la distance entre l'extrémité du doigt 50 et le noyau 54 sur la distance entre le sommet 56 et le noyau 54,
- une deuxième étape de vérification 312 au cours de laquelle les deuxièmes moyens de vérification 112 vérifient que la distance entre le sommet 56 et le noyau 54 ainsi calculée est comprise dans le premier intervalle prédéfini,
- une troisième étape de vérification 312b au cours de laquelle les troisièmes moyens de vérification 112b vérifient que le rapport ainsi calculé est compris dans le deuxième intervalle prédéfini, et
- une première étape de prise de décision 314 au cours de laquelle les premiers moyens de prise de décision 114 prennent une décision quant à la véracité de l'empreinte digitale 51 à partir d'informations transmises par les premiers moyens de vérification 113 et les deuxièmes moyens de vérification 112 et les troisièmes moyens de vérification 112b après respectivement la première étape de vérification 313, la deuxième étape de vérification 312 et la troisième étape de vérification 312b.

Le premier intervalle et le deuxième intervalle prédéfinis sont déterminés pour tenir compte de la précision de détection que l'on souhaite obtenir. Le premier intervalle et le deuxième intervalle peuvent être réglés par apprentissage sur une base de vrais doigts, en se réglant pour un taux de rejet pré-déterminé, par exemple 1%.

L'étape d'acquisition 304 peut consister en une reconstruction du modèle tridimensionnel du doigt 50 à partir des images capturées.

Il peut arriver que le doigt 50 présente un relief relativement accidenté ou présente plusieurs dômes, l'étape de localisation 308 peut alors échouer à localiser un sommet 56. De même certaines fraudes réalisées par moulage d'un doigt ne présentent pas de dôme, mais un creux caractéristique à la place.

Le procédé de vérification 300 se poursuit alors par une étape de prédiction 316 au cours de laquelle des moyens de prédiction 116 du dispositif de vérification 100 déterminent une zone susceptible de contenir ledit sommet 56 à partir de la position du noyau 54 déterminée par les moyens de détermination 106 et l'orientation du doigt déterminées par les moyens d'orientation 109, puis une étape de test 318 au cours de laquelle des moyens de test 118 du dispositif de vérification 100 calculent la courbure de ladite zone qui est définie comme la moyenne sur ladite zone de la courbure moyenne de la surface du doigt 50 et testent si cette courbure est comprise dans un troisième intervalle prédéfini, puis une deuxième étape de prise de décision 320 au cours de laquelle des deuxièmes moyens de prise de décision 120 du dispositif de vérification 100 prennent une décision quant à la véracité de l'empreinte digitale 51 à partir d'une information transmise par les moyens de test 118 après l'étape de test 318.

La zone ainsi déterminée est située entre 1 et 3 mm du noyau 54 vers l'extrémité du doigt 50.

En particulier, le troisième intervalle est défini de manière à vérifier que la courbure de ladite zone est telle que la zone ne présente pas un creux.

Typiquement la moyenne sur ladite zone de la courbure moyenne doit être légèrement positive. Typiquement le troisième intervalle s'étend dans les valeurs positives.

En d'autres termes, si la moyenne sur ladite zone de la courbure moyenne n'est pas comprise dans le troisième intervalle prédéfini, le doigt 50 et l'empreinte 51 seront considérés comme faux et si la moyenne sur ladite zone de la courbure moyenne est comprise dans le troisième intervalle prédéfini, le doigt 50 et l'empreinte 51 seront considérés vrais.

En l'absence de détection d'un dôme et de son sommet 56 dans la zone attendue de sa présence, la présence d'un creux est donc également caractéristique d'une fraude.

Le procédé de vérification 300 peut être utilisé comme procédé unique de vérification, mais il est préférentiellement utilisé avec d'autres procédés de vérification et sert à consolider les décisions de ces autres procédés de vérification.

Classiquement, le dispositif de vérification 100 comporte un processeur ou CPU (« Central Processing Unit » en anglais) ; une mémoire vive RAM (« Random Access Memory » en anglais) ; une mémoire morte ROM (« Read Only Memory » en anglais.

Les moyens de détermination 106, les moyens de localisation 108, les moyens d'orientation 109, les moyens de position 111, les premiers moyens de vérification 113, les moyens de calcul 110, les deuxièmes moyens de vérification 112, les troisièmes moyens de vérification 112b, les premiers moyens de prise de décision 114, les moyens de prédiction 116, les moyens de test 118, et les deuxièmes moyens de prise de décision 120 sont réalisés par le processeur.

Bien entendu, la présente invention n'est pas limitée aux exemples et modes de réalisation décrits et représentés ici, mais elle est susceptible de nombreuses variantes accessibles à l'homme du métier.

## Revendications

1. Dispositif de vérification (100) destiné à vérifier la véracité d'une empreinte digitale (51) du doigt (50) d'une personne, le dispositif de vérification (100) comportant :
- un système de capture (102) destiné à capturer sans contact au moins une image dudit doigt (50) et de ladite empreinte (51),
- des moyens d'acquisition (104) destinés à acquérir sans contact un modèle tridimensionnel du doigt (50),
- des moyens de détermination (106) destinés à déterminer le noyau (54) sur l'image (52) de l'empreinte (51),
- des moyens d'orientation (109) destinés à déterminer l'orientation et la position de l'extrémité dudit doigt (50),
- des moyens de localisation (108) destinés à localiser le sommet (56) du modèle tridimensionnel,
- des moyens de position (111) destinés à déterminer les positions relatives entre ladite extrémité, ledit sommet (56) et ledit noyau (54),
- des premiers moyens de vérification (113) destinés à vérifier que les positions relatives du noyau (54), du sommet (56) et de l'extrémité du doigt (50) ainsi déterminées sont conformes à celles attendues,
- des moyens de calcul (110) destinés à calculer la distance entre le sommet (56) du modèle tridimensionnel ainsi localisé et le noyau (54) ainsi déterminé,
- des deuxièmes moyens de vérification (112) destinés à vérifier que la distance entre le sommet (56) et le noyau (54) ainsi calculée est comprise dans un premier intervalle prédéfini, et
- des premiers moyens de prise de décision (114) destinés à prendre une décision quant à la véracité de l'empreinte digitale (51) à partir d'informations transmises par les premiers moyens de vérification (113) et les deuxièmes moyens de vérification (112).

2. Dispositif de vérification (100) selon la revendication 1, **caractérisé en ce que** les moyens de calcul (110) sont également destinés à calculer la distance entre l'extrémité du doigt (50) et le noyau (54) et le rapport de la distance entre l'extrémité du doigt (50) et le noyau (54) sur la distance entre le sommet (56) et le noyau (54), et **en ce que** le dispositif de vérification (100) comporte en outre des troisièmes moyens de vérification (112b) destinés à vérifier que le rapport ainsi calculé est compris dans un deuxième intervalle prédéfini, et **en ce que** les premiers moyens de prise de décision (114) sont destinés à prendre une décision quant à la véracité de l'empreinte digitale (51) à partir d'informations également transmises par les troisièmes moyens de vérification (112b).

3. Dispositif de vérification (100) selon l'une des revendications 1 ou 2, **caractérisé en ce qu'**il comporte en outre:
- des moyens de prédiction (116) destinés à déterminer une zone susceptible de contenir ledit sommet (56) à partir de la position du noyau (54) déterminée par les moyens de détermination (106),
- des moyens de test (118) destinés à calculer la courbure de ladite zone et à tester si cette courbure est comprise dans un troisième intervalle prédéfini, où la courbure de la zone est la moyenne sur la zone de la courbure moyenne de la surface du doigt,
- des deuxièmes moyens de prise de décision (120) destinés à prendre une décision quant à la véracité de l'empreinte digitale (51) à partir d'une information transmise par les moyens de test (118).

4. Procédé de vérification (300) mis en oeuvre par le dispositif de vérification (100) de la revendication 2 et comportant :
- une étape de capture (302) au cours de laquelle le système de capture (102) capture sans contact au moins une image dudit doigt (50) et de ladite empreinte (51),
- une étape de construction (304) au cours de laquelle les moyens d'acquisition (104) acquièrent sans contact un modèle tridimensionnel du doigt (50),
- une étape de détermination (306) au cours de laquelle les moyens de détermination (106) déterminent le noyau (54) sur l'image (52) de l'empreinte (51),
- une étape d'orientation (309) au cours de laquelle les moyens d'orientation (109) déterminent l'orientation et la position de l'extrémité dudit doigt (50),
- une étape de localisation (308) au cours de laquelle les moyens de localisation (108) localisent le sommet (56) du modèle tridimensionnel,
- une étape de position (311) au cours de laquelle les moyens de position (111) déterminent les positions relatives entre ladite extrémité, ledit sommet (56) et ledit noyau (54),
- une première étape de vérification (313) au cours de laquelle les premiers moyens de vérification (113) vérifient que les positions relatives ainsi déterminées sont conformes à celles attendues,
- une étape de calcul (310) au cours de laquelle les moyens de calcul (110) calculent la distance entre le sommet (56) du modèle tridimensionnel ainsi localisé et le noyau (54) ainsi déterminé, ainsi que la distance entre l'extrémité du doigt et le noyau (54) et le rapport de la distance entre l'extrémité du doigt (50) et le noyau (54) sur la distance entre le sommet (56) et le noyau (54),
- une deuxième étape de vérification (312) au cours de laquelle les deuxièmes moyens de vérification (112) vérifient que la distance entre le sommet (56) et le noyau (54) ainsi calculée est comprise dans le premier intervalle prédéfini,
- une troisième étape de vérification (312b) au cours de laquelle les troisièmes moyens de vérification (112b) vérifient que le rapport ainsi calculé est compris dans le deuxième intervalle prédéfini, et
- une première étape de prise de décision (314) au cours de laquelle les premiers moyens de prise de décision (114) prennent une décision quant à la véracité de l'empreinte digitale (51) à partir d'informations transmises par les premiers moyens de vérification (113), les deuxièmes moyens de vérification (112) et les troisièmes moyens de vérification (112b) après respectivement la première étape de vérification (313), la deuxième étape de vérification (312) et la troisième étape de vérification (312b).

5. Procédé de vérification (300) selon la revendication 4, **caractérisé en ce qu'**il comporte en outre:
- une étape de prédiction (316) au cours de laquelle les moyens de prédiction (116) déterminent la zone susceptible de contenir ledit sommet (56) à partir de la position du noyau (54) déterminée par les moyens de détermination (106) et l'orientation du doigt déterminée par les moyens d'orientation (109),
- une étape de test (318) au cours de laquelle les moyens de test (118) calculent la courbure de ladite zone et testent si cette courbure est comprise dans le troisième intervalle prédéfini, et
- une deuxième étape de prise de décision (320) au cours de laquelle les deuxièmes moyens de prise de décision (120) prennent une décision quant à la véracité de l'empreinte digitale (51) à partir d'une information transmise par les moyens de test (118) après l'étape de test (318).

## Patentansprüche

1. Verifikationsvorrichtung (100), die dazu bestimmt ist, die Richtigkeit eines digitalen Abdrucks (51) des Fingers (50) einer Person zu verifizieren, wobei die Verifikationsvorrichtung (100) Folgendes umfasst:
- ein Sensorsystem (102), das dazu bestimmt ist, wenigstens ein Bild des Fingers (50) und des Abdrucks (51) kontaktlos aufzunehmen,
- Erfassungsmittel (104), die dazu bestimmt sind, ein dreidimensionales Modell des Fingers (50) kontaktlos zu erfassen,
- Bestimmungsmittel (106), die dazu bestimmt sind, den Kern (54) auf dem Bild (52) des Abdrucks (51) zu bestimmen,
- Orientierungsmittel (109), die dazu bestimmt sind, die Orientierung und die Position des Endes des Fingers (50) zu bestimmen,
- Lokalisierungsmittel (108), die dazu bestimmt sind, den Scheitelpunkt (56) des dreidimensionalen Modells zu lokalisieren,
- Positionsmittel (111), die dazu bestimmt sind, die relativen Positionen zwischen dem Ende, dem Scheitelpunkt (56) und dem Kern (54) zu bestimmen,
- erste Verifikationsmittel (113), die dazu bestimmt sind, zu verifizieren, dass die auf diese Weise bestimmten relativen Positionen des Kerns (54), des Scheitelpunkts (56) und des Endes des Fingers (50) mit jenen, die erwartet werden, übereinstimmen,
- Rechenmittel (110), die dazu bestimmt sind, den Abstand zwischen dem somit lokalisierten Scheitelpunkt (56) des dreidimensionalen Modells und dem somit bestimmten Kern (54) zu berechnen,
- zweite Verifikationsmittel (112), die dazu bestimmt sind, zu verifizieren, dass der somit berechnete Abstand zwischen dem Scheitelpunkt (56) und dem Kern (54) in einem ersten im Voraus definierten Intervall liegt, und
- erste Entscheidungsmittel (114), die dazu bestimmt sind, eine Entscheidung hinsichtlich der Richtigkeit des digitalen Abdrucks (51) anhand von Informationen, die von den ersten Verifikationsmitteln (113) und von den zweiten Verifikationsmitteln (112) übertragen werden, zu treffen.

2. Verifikationsvorrichtung (100) nach Anspruch 1, **dadurch gekennzeichnet, dass** die Rechenmittel (110) außerdem dazu bestimmt sind, den Abstand zwischen dem Ende des Fingers (50) und dem Kern (54) und das Verhältnis des Abstands zwischen dem Ende des Fingers (50) und dem Kern (54) zu dem Abstand zwischen dem Scheitelpunkt (56) und dem Kern (54) zu berechnen, und dass die Verifikationsvorrichtung (100) außerdem dritte Verifikationsmittel (112) umfasst, die dazu bestimmt sind, zu verifizieren, dass das somit berechnete Verhältnis in einem zweiten im Voraus definierten Intervall liegt, und dass die ersten Entscheidungsmittel (114) dazu bestimmt sind, eine Entscheidung hinsichtlich der Richtigkeit des digitalen Abdrucks (51) anhand von Informationen, die auch von den dritten Verifikationsmitteln (112b) übertragen werden, zu treffen.

3. Verifikationsvorrichtung (100) nach einem der Ansprüche 1 oder 2, **dadurch gekennzeichnet, dass** sie außerdem Folgendes umfasst:
- Vorhersagemittel (116), die dazu bestimmt sind, eine Zone, die den Scheitelpunkt (56) enthalten kann, anhand der Position des Kerns (54), die durch die Bestimmungsmittel (106) bestimmt worden ist, zu bestimmen,
- Prüfmittel (118), die dazu bestimmt sind, die Krümmung der Zone zu berechnen und zu prüfen, ob diese Krümmung in einem dritten im Voraus definierten Intervall liegt, wobei die Krümmung der Zone der Mittelwert über die Zone der mittleren Krümmung der Oberfläche des Fingers ist,
- zweite Entscheidungsmittel (120), die dazu bestimmt sind, eine Entscheidung hinsichtlich der Richtigkeit des digitalen Abdrucks (51) anhand von Informationen, die von den Prüfmitteln (118) übertragen werden, zu treffen.

4. Verifikationsverfahren (300), das von der Verifikationsvorrichtung (100) nach Anspruch 2 ausgeführt wird und Folgendes umfasst:
- einen Aufnahmeschritt (302), in dessen Verlauf das Aufnahmesystem (102) wenigstens ein Bild des Fingers (50) und des Abdrucks (51) kontaktlos aufnimmt,
- einen Konstruktionsschritt (304), in dessen Verlauf die Erfassungsmittel (104) ein dreidimensionales Modell des Fingers (50) kontaktlos erfassen,
- einen Bestimmungsschritt (306), in dessen Verlauf die Bestimmungsmittel (106) den Kern (54) in dem Bild (52) des Abdrucks (51) bestimmen,
- einen Orientierungsschritt (309), in dessen Verlauf die Orientierungsmittel (109) die Orientierung und die Position des Endes des Fingers (50) bestimmen,
- einen Lokalisierungsschritt (308), in dessen Verlauf die Lokalisierungsmittel (108) den Scheitelpunkt (56) des dreidimensionalen Modells lokalisieren,
- einen Positionsschritt (311), in dessen Verlauf die Positionsmittel (111) die relativen Positionen zwischen dem Ende, dem Scheitelpunkt (56) und dem Kern (54) bestimmen,
- einen ersten Verifikationsschritt (313), in dessen Verlauf die ersten Verifikationsmittel (113) verifizieren, dass die somit bestimmten relativen Positionen mit jenen, die erwartet werden, übereinstimmen,
- einen Rechenschritt (310), in dessen Verlauf die Rechenmittel (110) den Abstand zwischen dem somit lokalisierten Scheitelpunkt (56) des dreidimensionalen Modells und dem somit bestimmten Kern (54) sowie den Abstand zwischen dem Ende des Fingers und dem Kern (54) und das Verhältnis des Abstands zwischen dem Ende des Fingers (50) und dem Kern des Fingers (54) zu dem Abstand zwischen dem Scheitelpunkt (56) und dem Kern (54) berechnen,
- einen zweiten Verifikationsschritt (312), in dessen Verlauf die zweiten Verifikationsmittel (112) verifizieren, dass der somit berechnete Abstand zwischen dem Scheitelpunkt (56) und dem Kern (54) in dem ersten im Voraus definierten Intervall liegt,
- einen dritten Verifikationsschritt (312b), in dessen Verlauf die dritten Verifikationsmittel (112) verifizieren, dass das somit berechnete Verhältnis in dem zweiten im Voraus definierten Intervall liegt, und
- einen ersten Entscheidungsschritt (314), in dessen Verlauf die ersten Entscheidungsmittel (114) eine Entscheidung hinsichtlich der Richtigkeit des digitalen Abdrucks (51) anhand von Informationen, die von den ersten Verifikationsmitteln (113), den zweiten Verifikationsmitteln (112) und den dritten Verifikationsmitteln (112b) nach dem ersten Verifikationsschritt (313) bzw. dem zweiten Verifikationsschritt (312) bzw. dem dritten Verifikationsschritt (312b) übertragen werden, treffen.

5. Verifikationsverfahren (300) nach Anspruch 4, **dadurch gekennzeichnet, dass** es außerdem Folgendes umfasst:
- einen Vorhersageschritt (316), in dessen Verlauf die Vorhersagemittel (116) die Zone, die den Scheitelpunkt (56) enthalten kann, anhand der Position des Kerns (54), die durch die Bestimmungsmittel (106) bestimmt wird, und der Orientierung des Fingers, die durch die Orientierungsmittel (109) bestimmt wird, bestimmen,
- einen Prüfschritt (318), in dessen Verlauf die Prüfmittel (118) die Krümmung der Zone berechnen und prüfen, ob diese Krümmung in dem dritten im Voraus definierten Intervall liegt, und
- einen zweiten Entscheidungsschritt (320), in dessen Verlauf die zweiten Entscheidungsmittel (120) eine Entscheidung hinsichtlich der Richtigkeit des digitalen Abdrucks (51) anhand von Informationen, die von den Prüfmitteln (118) nach dem Prüfschritt (318) übertragen werden, treffen.

## Claims

1. Checking device (100) intended to check the veracity of a fingerprint (51) of the finger (50) of a person, the checking device (100) comprising:
- a capture system (102) intended to contactlessly capture at least one image of the said finger (50) and of the said print (51),
- acquisition means (104) intended to contactlessly acquire a three-dimensional model of the finger (50),
- determination means (106) intended to determine the core (54) on the image (52) of the print (51),
- orientation means (109) intended to determine the orientation and the position of the end of the said finger (50),
- location means (108) intended to locate the apex (56) of the three-dimensional model,
- position means (111) intended to determine the relative positions between the said end, the said apex (56) and the said core (54),
- first checking means (113) intended to check that the relative positions thus determined of the core (54), of the apex (56) and of the end of the finger (50) comply with those expected,
- calculation means (110) intended to calculate the distance between the apex (56) of the three-dimensional model thus located and the core (54) thus determined,
- second checking means (112) intended to check that the distance thus calculated between the apex (56) and the core (54) lies in a first predefined interval, and
- first decision taking means (114) intended to take a decision as regards the veracity of the fingerprint (51) on the basis of information transmitted by the first checking means (113) and the second checking means (112).

2. Checking device (100) according to Claim 1, **characterized in that** the calculation means (110) are also intended to calculate the distance between the end of the finger (50) and the core (54) and the ratio of the distance between the end of the finger (50) and the core (54) over the distance between the apex (56) and the core (54), and **in that** the checking device (100) furthermore comprises third checking means (112b) intended to check that the ratio thus calculated lies in a second predefined interval, and **in that** the first decision taking means (114) are intended to take a decision as regards the veracity of the fingerprint (51) on the basis of information also transmitted by the third checking means (112b).

3. Checking device (100) according to one of Claims 1 or 2, **characterized in that** it furthermore comprises:
- prediction means (116) intended to determine a zone liable to contain the said apex (56) on the basis of the position, determined by the determination means (106), of the core (54),
- test means (118) intended to calculate the curvature of the said zone and to test whether this curvature lies in a third predefined interval, where the curvature of the zone is the average over the zone of the average curvature of the surface of the finger,
- second decision taking means (120) intended to take a decision as regards the veracity of the fingerprint (51) on the basis of an item of information transmitted by the test means (118).

4. Checking method (300) implemented by the checking device (100) of Claim 2 and comprising:
- a capture step (302) in the course of which the capture system (102) contactlessly captures at least one image of the said finger (50) and of the said print (51),
- a construction step (304) in the course of which the acquisition means (104) contactlessly acquire a three-dimensional model of the finger (50),
- a determination step (306) in the course of which the determination means (106) determine the core (54) on the image (52) of the print (51),
- an orientation step (309) in the course of which the orientation means (109) determine the orientation and the position of the end of the said finger (50),
- a location step (308) in the course of which the location means (108) locate the apex (56) of the three-dimensional model,
- a position step (311) in the course of which the position means (111) determine the relative positions between the said end, the said apex (56) and the said core (54),
- a first checking step (313) in the course of which the first checking means (113) check that the relative positions thus determined comply with those expected,
- a calculation step (310) in the course of which the calculation means (110) calculate the distance between the apex (56) of the three-dimensional model thus located and the core (54) thus determined, as well as the distance between the end of the finger and the core (54) and the ratio of the distance between the end of the finger (50) and the core (54) over the distance between the apex (56) and the core (54),
- a second checking step (312) in the course of which the second checking means (112) check that the distance thus calculated between the apex (56) and the core (54) lies in the first predefined interval,
- a third checking step (312b) in the course of which the third checking means (112b) check that the ratio thus calculated lies in the second predefined interval, and
- a first decision taking step (314) in the course of which the first decision taking means (114) take a decision as regards the veracity of the fingerprint (51) on the basis of information transmitted by the first checking means (113), the second checking means (112) and the third checking means (112b) after respectively the first checking step (313), the second checking step (312) and the third checking step (312b).

5. Checking method (300) according to Claim 4, **characterized in that** it furthermore comprises:
- a prediction step (316) in the course of which the prediction means (116) determine the zone liable to contain the said apex (56) on the basis of the position, determined by the determination means (106), of the core (54) and the orientation, determined by the orientation means (109), of the finger,
- a test step (318) in the course of which the test means (118) calculate the curvature of the said zone and test whether this curvature lies in the third predefined interval, and
- a second decision taking step (320) in the course of which the second decision taking means (120) take a decision as regards the veracity of the fingerprint (51) on the basis of an item of information transmitted by the test means (118) after the test step (318).
